# EUROPEAN PATENT APPLICATION

(11) **EP 3 040 267 A1**
(43) Date of publication of application: **06.07.2016**
(21) Application number: 15150004.8
(22) Date of filing: 02.01.2015
(51) Int. Cl.: B64C 1/14

(54) **Door unit for an aircraft**

(71) Applicant: Airbus Operations GmbH, 21129 Hamburg (DE)
(72) Inventor: Tiryaki, Memis, 21129 Hamburg (DE); Hille, Sebastian, 52064 Aachen (DE)
(74) Representative: Kopf Westenberger Wachenhausen Patentanwälte PartG mbB

(57) **Abstract**

The invention relates to a door unit (10) for an aircraft (100), an aircraft (100) comprising such door unit (10), and a method for closing such door unit (10). The door unit (10) comprises a door segment (1) and at least one support strut (2). The door segment (1) is configured to close a compartment (3) ofthe aircraft (100). The support strut (2) is attached to the door segment (1) and, in a closed position of the door segment (1), configured to support a cross beam (4) of the aircraft (100). The aircraft (100) comprises a compartment (3), a door segment (1) configured to close the compartment (3), a cross beam (4), and at least one support strut (2) attached to the door segment (1). The support strut (2) is, in a closed position of the door segment (1), configured to support the cross beam (4). The method for closing such door unit (10) comprises the following steps: moving a door segment (1) ofthe door unit (10) from an open to a closed position, and fixing the door segment (1) in the closed position. In the closed position, the door segment (1) closes a compartment (3) ofthe aircraft (100) and a support strut (2) attached to the door segment (1) supports a cross beam (4) of the aircraft (100).

## Description

### FIELD OF THE INVENTION

The invention relates to a door unit for an aircraft, an aircraft comprising such door unit, and a method for closing such door unit. In particular, invention relates to a door unit which is a cargo door separating a cargo compartment of the aircraft from the surroundings of the aircraft.

### BACKGROUND OF THE INVENTION

To avoid an excessive downward deflection of cross beams forming a floor in an aircraft, these cross beams are generally supported by struts. These struts extend between the cross beams and frames of the aircraft's fuselage. However, this support of the crossbeams cannot be provided in the area of openings in the fuselage, as e.g. in the area of doors. As a result, the cross beams arranged above the opening either deflect considerably or can only be loaded with lesser weight compared to crossbeams not arranged in the area of openings.

### SUMMARY OF THE INVENTION

Hence, there may be a need to provide an improved door unit for an aircraft, which in particular allows a support of cross beams.

The problem of the present invention is solved by the subject-matters of the independent claims, wherein further embodiments are incorporated in the dependent claims. It should be noted that the aspects of the invention described in the following apply also to the door unit for an aircraft, the aircraft comprising such door unit, and a method for closing such door unit.

According to the present invention, a door unit for an aircraft is presented. The door unit comprises a door segment and at least one support strut. The door segment is configured to close a compartment of the aircraft. The support strut is attached to the door segment and, in a closed position of the door segment, configured to support a cross beam of the aircraft.

Thereby, the present invention provides an improved door unit for an aircraft. The door unit is configured to support a cross beam of the aircraft. Thereby, a deflection of the cross beam under a load is reduced or eliminated. As a result, the clearance under the cross beam and in the door surrounding is not reduced. The cross beam can be used to store larger weights and/or can be made lighter, just like other load carrying floor structures related to the door unit, e.g. longitudinal beams, leading in summary to weight savings in the aircraft.

In an example, the door unit is a cargo door separating a cargo compartment of the aircraft from the surroundings of the aircraft. In an example, the door unit further comprises a hinge arranged at an upper edge of the door segment, wherein the hinge is configured to pivot the door segment between a lower, closed position and an upper, open position. The hinge can also be positioned at a lateral edge of the door segment to pivot the door segment laterally between a closed and an open position.

The support of the cross beam of the aircraft by the support strut can be achieved by connecting or attaching one end of the support strut to the door segment and the other end to the cross beam of the aircraft.

The door segment may comprise a door leaf and at least one, preferably several door frames. The door frame may be a rip extending at least partially along the length of the door segment and e.g. carrying a circumferential load of the door unit and/or the fuselage in the closed position. The door frame may, of course, also extend along the width or traverse to the door segment. Also combinations and a grit shaped door frame are possible. The door segment or the door frame may also be provided with a receptacle for the support strut.

In an example, the support strut is attached to a door frame of the door segment. In another example, the support strut is attached to a door frame middle part arranged between two adjacent door frames of the door segment. The support strut may also be attached to the door leaf. Also combinations are possible.

In an example, the cross beam is a part or carrier of a floor, an intermediate level or an upper level of the aircraft. The cross beam may be a passenger (PAX) floor cross beam. In an example, the support strut is connected to the cross beam. In another example, the support strut is connected to a cross beam middle part arranged between two adjacent cross beams. Also combinations are possible.

The support strut may carry load, e.g. between the cross beam and a cargo door. The support strut may be configured to reduce or eliminate a deflection of the cross beam under load. The deflection of the cross beam may be a vertical deflection (mainly downward, but also upward). In an example, the support strut is configured to support the cross beam only in the closed position of the door segment. The support strut may be a rod or a system of rods. The support strut may be straight or curved. The support strut may be massive or a profile.

The support strut may not block or obstruct the door opening, e.g. not hindering a transport of cargo containers into a cargo compartment of the aircraft. The support strut may move along with the door segment between the open and the closed position. In an example, the support strut is therefore telescopic. In another example, the support strut is detachable from the door segment and/or the cross beam. For opening, the support strut may then be detached or released from the door segment and/or the cross beam to be moved or pulled out of a door opening to avoid e.g. an obstruction of cargo boxes into the aircraft.

The support strut may work in cooperation with an actuator system driving the door segment between the open and the closed position. The actuator system may be electrically or hydraulically driven. The actuator system may be a baseline actuator or a one- or multistep actuator. The actuator system may be separated to the support strut or may be inserted into the support strut. In an example, the support strut is an actuator for moving the door segment between the closed and an open position. In an example, the support strut is a hydraulic cylinder for moving the door segment between the closed and an open position.

Exemplarily, the door unit may comprise between two and ten support struts attached to the door segment and configured to support between two and ten cross beams, wherein each support strut supports one cross beam.

According to the present invention, also an aircraft is presented. The aircraft comprises a compartment, a door segment configured to close the compartment, a cross beam, and at least one support strut attached to the door segment. The support strut is, in a closed position of the door segment, configured to support the cross beam. In an open position of the door segment, the support strut may not be configured to support the cross beam.

According to the present invention, also a method for closing a door unit of an aircraft is presented. It comprises the following steps:
- moving a door segment of the door unit from an open to a closed position, and
- fixing the door segment in the closed position.

In the closed position, the door segment closes a compartment of the aircraft and a support strut attached to the door segment supports a cross beam of the aircraft.

In an example, the door segment is part of a cargo door separating a cargo compartment of the aircraft from the surroundings of the aircraft. The support of the cross beam of the aircraft by the support strut can be achieved by connecting or attaching one end of the support strut to the door segment and the other end to the cross beam of the aircraft. The door segment may comprise at least one door frame. The door frame may be rip shaped and may be provided with a fitting for the support strut.

It shall be understood the the door unit for an aircraft, the aircraft comprising such door unit, and a method for closing such door unit according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawing:
- Fig. 1: shows schematically and exemplarily a door unit for an aircraft.
- Fig. 2: shows a cross section though an aircraft's fuselage.
- Fig. 3: shows schematically and exemplarily another door unit for an aircraft.
- Figs. 4a to 4d: show schematically and exemplarily other door units for an aircraft.
- Fig. 5: shows schematically and exemplarily an aircraft comprising one of such door units.

### DETAILED DESCRIPTION OF EMBODIMENTS

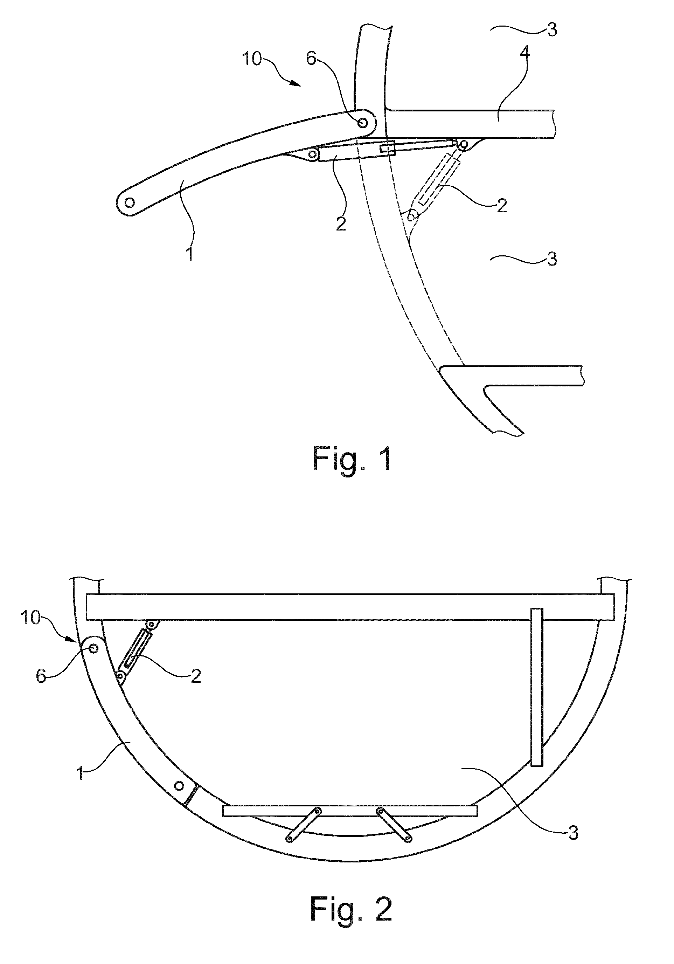

**Fig. 1** shows schematically and exemplarily a door unit 10 for an aircraft 100. The door unit 10 is a cargo door separating a cargo compartment 3 of the aircraft 100 from the surroundings of the aircraft 100. The door unit 10 comprises a hinge 6 arranged at an upper edge of the door unit 10 to pivot the door segment 1 between an upper, open position (Fig. 1) and a lower, closed position (Fig. 2). **Fig. 2** shows a cross section though an aircraft's fuselage.

The door unit 10 comprises a door segment 1 and a support strut 2. The door segment 1 is configured to close the cargo compartment 3. The support strut 2 is attached to the door segment 1 and to a cross beam 4. The cross beam 4 is here a part of the cargo compartment's ceiling, which is, at the same time, the floor of another compartment 3 of the aircraft 100 arranged above the cross beam 4.

In an open position of the door segment 1, the support strut 2 does not block the door opening, which means e.g. does not hinder a transport of cargo containers into a cargo compartment 3 of the aircraft 100. The support strut 2 is here telescopic and moves along with the door segment 1 between the open and the closed position. In the open position, the support strut 2 is here not configured to support the cross beam 4. In other words, the support strut 2 is not suitable for carrying larger loads of subjacent structures, e.g. a loaded cargo floor.

In a closed position of the door segment 1, however, the support strut 2 supports the cross beam 4. Thereby, a downward deflection of the cross beam 4 under a load is reduced or eliminated. As a result, the clearance under the cross beam 4 and in the door surrounding is not reduced and the cross beam 4 can be used to store larger weights and/or can be made lighter, just like other load carrying floor structures, e.g. longitudinal beams, leading to weight savings in the aircraft 100.

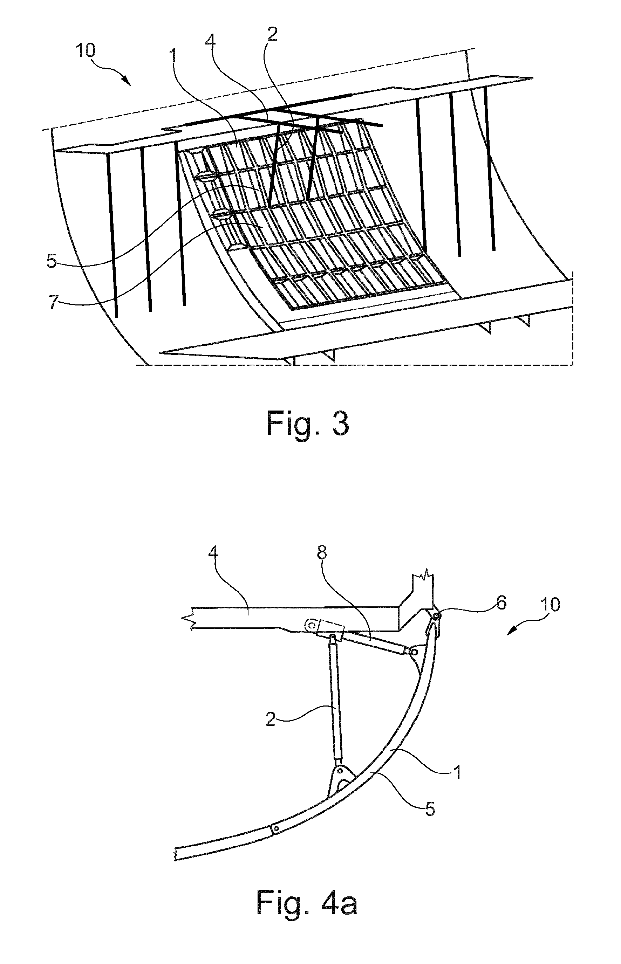

**Fig. 3** shows schematically and exemplarily another door unit 10 for an aircraft 100 comprising a door segment 1. The door segment 1 here comprises a door leaf 7 and several door frames 5. The door frames 5 are here rips extending along and transverse to the length of the door segment 1. The door frames 5 hereby form a grit shaped door frame. Fig. 3 further shows two support struts 2 extending between two crossings of door frames 5 and two cross beams 4 being part of the cargo compartment's ceiling, which is, at the same time, the floor of another compartment of the aircraft 100 arranged above the cross beam 4. Fig. 3 further shows three support struts 2 arranged on each side of the door unit 10 extending between the ceiling and the fuselage.

Figs. 4a to 4d show schematically and exemplarily other door units 10 for an aircraft 100. In **Fig. 4a****,** the support strut 2 is a telescopical rod connecting the door segment 1 or door frame 5 with the cross beam 4. The support strut 2 works next to and in cooperation with an actuator 8 system driving the door segment 1 between the open and the closed position. The actuator 8 is here a baseline actuator.

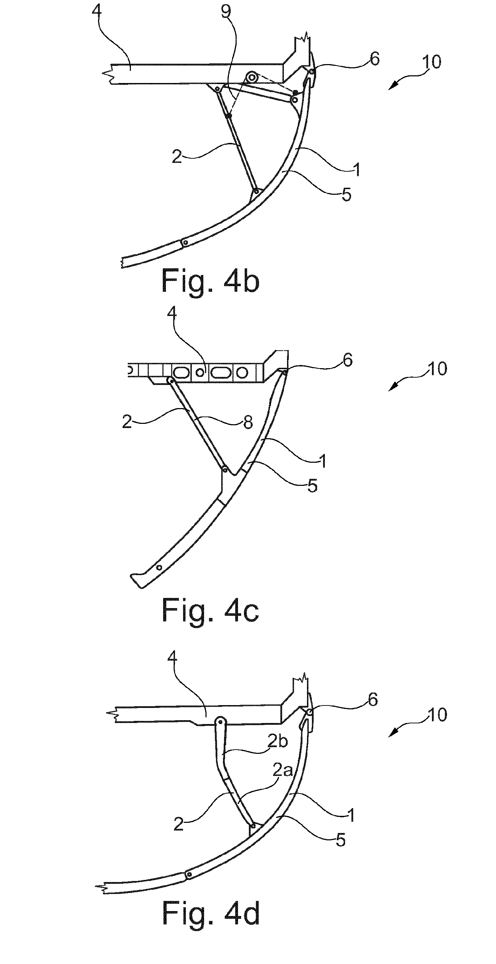

In **Fig. 4b****,** the support strut 2 is detachable from the door segment 1 or door frame 5. For opening, the support strut 2 is detached from the door segment 1 and pulled by a rope 9 out of a door opening to avoid e.g. an obstruction of cargo boxes into the aircraft 100.

In **Fig. 4c****,** the support strut 2 is or comprises an actuator 8 for moving the door segment 1 between the closed and an open position, which means the actuator 8 is combined with or inserted into the support strut 2.

In **Fig. 4d****,** the support strut 2 is or comprises a combination of two single rods. One single rod 2a is a standard, linear rod, the other single rod 2b is a curved rod adapted to the operating conditions.

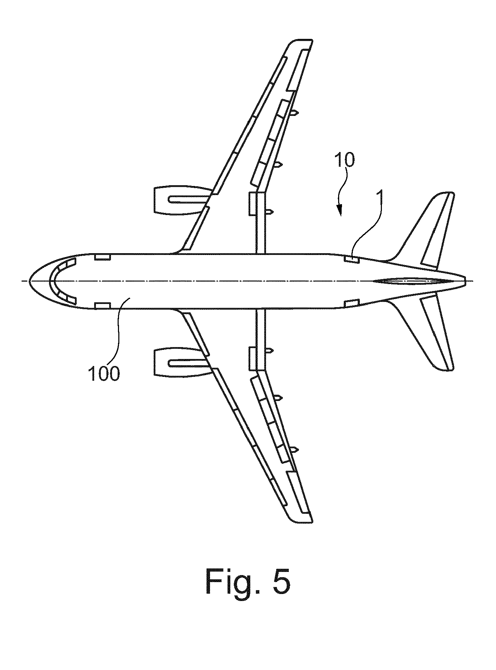

**Fig. 5** shows schematically and exemplarily an aircraft 100 comprising a door unit 10 as explained above with a door segment 1 configured to close a compartment of the aircraft 100.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A door unit (10) for an aircraft (100), comprising
- a door segment (1); and
- at least one support strut (2);
wherein the door segment (1) is configured to close a compartment (3) of the aircraft (100),
wherein the support strut (2) is attached to the door segment (1) and, in a closed position of the door segment (1), configured to support a cross beam (4) of the aircraft (100).

2. Door unit (10) according to claim 1, wherein the support strut (2) is configured to support the cross beam (4) only in the closed position of the door segment (1).

3. Door unit (10) according to one of the preceding claims, wherein the support strut (2) is attached to a door frame (5) of the door segment (1).

4. Door unit (10) according to claim 1 or 2, wherein the support strut (2) is attached to a door frame (5) middle part arranged between two adjacent door frames (5) of the door segment (1).

5. Door unit (10) according to one of the preceding claims, wherein the support strut (2) is connected to the cross beam (4).

6. Door unit (10) according to one of the claims 1 to 4, wherein the support strut (2) is connected to a cross beam (4) middle part arranged between two adjacent cross beams (4).

7. Door unit (10) according to one of the preceding claims, wherein the cross beam (4) is a part of a floor, an intermediate level or an upper level of the aircraft (100).

8. Door unit (10) according to one of the preceding claims, wherein the support strut (2) is telescopic.

9. Door unit (10) according to one of the preceding claims, wherein the support strut (2) is detachable from the door segment (1) and/or the cross beam (4).

10. Door unit (10) according to one of the preceding claims, wherein the support strut (2) is an actuator for moving the door segment (1) between the closed and an open position.

11. Door unit (10) according to one of the preceding claims, wherein the support strut (2) is a hydraulic cylinder for moving the door segment (1) between the closed and an open position.

12. Door unit (10) according to one of the preceding claims, further comprising a hinge (6) arranged at an upper edge of the door segment (1), wherein the hinge (6) is configured to pivot the door segment (1) from the closed position to an open position.

13. Door unit (10) according to one of the preceding claims, wherein the door unit (10) is a cargo door separating a cargo compartment (3) of the aircraft (100) from the surroundings of the aircraft (100).

14. An aircraft (100) comprising a compartment (3), a door segment (1) configured to close the compartment (3), a cross beam (4), and at least one support strut (2) attached to the door segment (1), wherein the support strut (2) is, in a closed position of the door segment (1), configured to support the cross beam (4).

15. A method for closing a door unit (10) of an aircraft (100), comprising the following steps:
- moving a door segment (1) of the door unit (10) from an open to a closed position, and
- fixing the door segment (1) in the closed position,
wherein, in the closed position, the door segment (1) closes a compartment (3) of the aircraft (100) and a support strut (2) attached to the door segment (1) supports a cross beam (4) of the aircraft (100).
